# EUROPÄISCHE PATENTSCHRIFT

(11) **EP 4 244 651 B1**
(45) Veröffentlichungstag und Bekanntmachung des Hinweises auf die Patenterteilung: **06.11.2024**
(21) Anmeldenummer: 21807080.3
(22) Anmeldetag: 08.11.2021
(51) Int. Cl.: G01S 7/497, G01S 17/42, G01S 17/10

(54) **VERBESSERTE FUNKTIONSÜBERPRÜFUNG EINES LASERSCANNERS**
IMPROVED VERIFICATION OF THE FUNCTIONALITY OF A LASER SCANNER
VÉRIFICATION AMELIORÉE DU FONCTIONNEMENT D'UN SCANNER LASER

(30) Priorität: 11.11.2020 DE 102020129663
(43) Veröffentlichungstag der Anmeldung: 20.09.2023
(73) Patentinhaber: Valeo Schalter und Sensoren GmbH, 74321 Bietigheim-Bissingen (DE)
(72) Erfinder: SERGEEV, Nikolai, 74321 Bietigheim-Bissingen (DE); DANIEL, Thiel, 74321 Bietigheim-Bissingen (DE)
(74) Vertreter: Pothmann, Karsten
(86) Internationale Anmeldenummer: PCT/EP2021/080903
(87) Internationale Veröffentlichungsnummer: WO 2022/101125

(56) Entgegenhaltungen:
- DE-A1- 102018 110 566

## Beschreibung

Die vorliegende Erfindung betrifft ein Verfahren zur Funktionsüberprüfung eines Laserscanners, der ein Gehäuse mit einem lichtdurchlässigen Fenster, eine innerhalb des Gehäuses angeordnete Sendeeinheit zum Aussenden von Lasersignalen, eine bewegliche Umlenkeinheit zur Umlenkung der Lasersignale sowie eine innerhalb des Gehäuses angeordnete Detektoreinheit, wobei mittels der Sendeeinheit während einer Prüfphase wenigstens ein Prüfsignal gesendet wird die Umlenkeinheit während der Prüfphase bezüglich der Sendeeinheit derart ausgerichtet wird, dass das wenigstens eine Prüfsignal nicht auf das Fenster gelenkt wird. Die Erfindung betrifft außerdem eine entsprechende Laserscannervorrichtung mit einer Recheneinheit und einem Laserscanner, ein Kraftfahrzeug mit einer Laserscannervorrichtung und ein Computerprogrammprodukt.

Lidarsysteme können an Kraftfahrzeugen montiert werden, um vielfältige Funktionen elektronischer Fahrzeugführungssysteme oder Fahrerassistenzsysteme zu realisieren. Diese Funktionen beinhalten Abstandsmessungen, Abstandsregelalgorithmen, Spurhalteassistenten, Objektverfolgungsfunktionen und so weiter.

Eine bekannte Bauform von Lidarsystemen sind sogenannte Laserscanner, bei denen ein Laserstrahl mittels einer Umlenkeinheit abgelenkt wird, so dass verschiedene Auslenkwinkel des Laserscanners realisiert werden können. In der Umgebung können die ausgesendeten Laserstrahlen teilweise reflektiert oder gestreut werden, und gestreute oder reflektiert Anteile können zum Teil wiederum auf den Laserscanner treffen, insbesondere auf eine Detektoreinheit des Laserscanners, die basierend auf den erfassten Anteilen entsprechende Detektorsignale erzeugen kann. Die Sendeeinheit eines Laserscanners enthält eine oder mehrere Laserlichtquellen und die Detektoreinheit enthält einen oder mehrere optische Detektoren, beispielsweise Fotodioden.

Die maximale Reichweite des Laserscanners ist, grundsätzlich und insbesondere im Automobilkontext, von hoher Bedeutung. Die Funktionsfähigkeit und insbesondere die maximale Reichweite eines Laserscanners kann beispielsweise durch die Verunreinigung der Lichtquellen oder der optischen Detektoren verursacht werden. Die Verunreinigung kann beispielsweise auf Staubpartikel zurückgehen, die während des Herstellungsprozesses auftreten. Solche Staubpartikel können die Lichtquelle oder den optischen Detektor teilweise verdecken und so die Reichweite des Laserscanners reduzieren. Prinzipiell können Verunreinigungen beispielsweise durch Tests am Ende des Herstellungsprozesses identifiziert werden. Es ist jedoch möglich, dass die Verunreinigungen erst nach dem Test entstehen oder dass bereits vor dem Test vorhandene Verunreinigungen erst nach dem Test die Lichtquelle beziehungsweise den optischen Detektor verdecken.

Im Dokument DE 10 2018 110 566 A1 wird ein Verfahren zur Überprüfung der Funktionsfähigkeit eines Laserscanners beschrieben. Dabei wird mittels eines Senders des Laserscanners ein Lichtsignal gesendet, während eine dreh- oder schwenkbare Umlenkspiegeleinheit so ausgerichtet ist, dass von dem Sender kommende Lichtsignale nicht auf ein Fenster als Gehäuse des Laserscanners gelenkt werden können. Das im Inneren des Gehäuses gestreute Lichtsignal wird mit dem Empfänger empfangen und mit einer Referenz verglichen. Abhängig von einem Ergebnis des Vergleichs wird gegebenenfalls ein Hinweis zur Funktionsfähigkeit des Laserscanners generiert.

Ein Nachteil dieses Verfahrens ist, dass die Funktionsfähigkeit des Laserscanners nur sehr unspezifisch überprüft werden kann, im Falle von detektierten Funktionsbeeinträchtigungen diese also nicht genauer spezifiziert werden können.

Vor diesem Hintergrund ist es eine Aufgabe der vorliegenden Erfindung, ein verbessertes Konzept zur Funktionsüberprüfung eines Laserscanners anzugeben, durch das Funktionseinschränkungen des Laserscanners spezifischer erkannt werden können.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, bei einem Laserscanner, dessen Detektoreinheit wenigstens zwei optische Detektoren enthält, für jedes entsprechende Detektorsignal eine Pulsweite zu bestimmen und die Pulsweiten unterschiedlicher Detektorsignale beziehungsweise Detektoren zueinander ins Verhältnis zu setzen, um die Funktionsfähigkeit zu überprüfen.

Gemäß dem verbesserten Konzept wird ein Verfahren zur Funktionsüberprüfung eines Laserscanners angegeben. Der Laserscanner weist ein Gehäuse mit einem lichtdurchlässigen Fenster auf sowie einen innerhalb des Gehäuses angeordneten Sensor zum Aussenden von Lasersignalen. Der Laserscanner weist außerdem eine bewegliche Umlenkeinheit zur Umlenkung der Lasersignale auf sowie eine innerhalb des Gehäuses angeordnete Detektoreinheit mit wenigstens zwei optischen Detektoren. Gemäß dem Verfahren wird mittels der Sendeeinheit während einer Prüfphase wenigstens ein Prüfsignal gesendet. Die Umlenkeinheit wird während der Prüfphase bezüglich der Sendeeinheit, insbesondere mittels einer Steuerungseinheit des Laserscanners, derart ausgerichtet, dass das wenigstens eine Prüfsignal, insbesondere durch die Umlenkeinheit, nicht auf das Fenster gelenkt wird. Anteile des wenigstens einen Prüfsignals, insbesondere reflektierte und/oder gestreute Anteile, werden mittels der wenigstens zwei optischen Detektoren erfasst und basierend auf den erfassten Anteilen werden mittels der wenigstens zwei optischen Detektoren wenigstens zwei Detektorsignale erzeugt. Mittels einer Recheneinheit, insbesondere mittels einer Recheneinheit des Laserscanners oder mittels einer mit dem Laserscanner gekoppelten Recheneinheit, wird für jedes der wenigstens zwei Detektorsignale eine Pulsweite bestimmt und ein Verhältnis der Pulsweite eines ersten Detektorsignals der wenigstens zwei Detektorsignale zu der Pulsweite eines zweiten Detektorsignals der wenigstens zwei Detektorsignale bestimmt. Eine Funktionsfähigkeit der Sendeeinheit und/oder der Detektoreinheit wird basierend auf dem Verhältnis überprüft, insbesondere mittels der Recheneinheit.

Hier und im Folgenden kann der Begriff "Licht" derart verstanden werden, dass davon elektromagnetische Wellen im sichtbaren Bereich, im infraroten Bereich und/oder im ultravioletten Bereich umfasst sind. Dementsprechend kann auch der Begriff "optisch" derart verstanden werden, dass er sich auf Licht nach diesem Verständnis bezieht. Bevorzugt entsprechen die Lasersignale sowie das Prüfsignal Licht im infraroten Bereich.

Das lichtdurchlässige Fenster des Gehäuses ist insbesondere lichtdurchlässig für Licht, das mittels der Sendeeinheit ausgesendet werden kann, insbesondere in Form der Lasersignale beziehungsweise des Prüfsignals. Außer dem Fenster kann das Gehäuse beispielsweise lichtundurchlässig sein.

Die Lasersignale sowie das wenigstens eine Prüfsignal entsprechen jeweils Lasersignalen, die mittels einer oder mehrerer Lichtquellen der Sendeeinheit, insbesondere Laserlichtquellen, beispielsweise Laserdioden, ausgesendet werden können. Insbesondere kann das wenigstens eine Prüfsignal als Spezialfall der Lasersignale angesehen werden, nämlich als solches Lasersignal, das während der Prüfphase ausgesendet wird. Nichtsdestotrotz können die Prüfsignale auch mit einer spezifisch angepassten spektralen oder sonstigen Zusammensetzung oder Struktur erzeugt und ausgesendet werden, die sich von anderen Lasersignalen, die außerhalb der Prüfphase erzeugt und ausgesendet werden, unterscheiden kann. Dies ist jedoch nicht zwingend notwendig.

Die Detektoreinheit, insbesondere die wenigstens zwei optischen Detektoren, ist beziehungsweise sind dazu eingerichtet, reflektierte oder gestreute Anteile der Lasersignale sowie des wenigstens einen Prüfsignals zu detektieren. Werden die Lasersignale durch das lichtdurchlässige Fenster in die Umgebung des Gehäuses emittiert, so können beispielsweise außerhalb des Laserscanners beziehungsweise des Gehäuses reflektierte oder gestreute Anteile des Lasersignals wieder in das Gehäuse einfallen und daraufhin detektiert werden. Im Falle des wenigstens einen Prüfsignals werden insbesondere innerhalb des Gehäuses gegebenenfalls mehrfach reflektierte und/oder gestreute Anteile des wenigstens einen Prüfsignals von den wenigstens zwei optischen Detektoren detektiert. Insbesondere verlässt das wenigstens eine Prüfsignal, indem es nicht auf das Fenster gelenkt wird, das Gehäuse des Laserscanners im Wesentlichen nicht.

Dass das wenigstens eine Prüfsignal nicht auf das Fenster gelenkt wird, kann insbesondere basierend auf einem strahlenoptischen Verständnis beziehungsweise einem Verständnis gemäß der geometrischen Optik aufgefasst werden.

Jeder optische Detektor der wenigstens zwei optischen Detektoren erzeugt insbesondere ein zugehöriges Detektorsignal der wenigstens zwei Detektorsignale basierend auf den von dem jeweiligen optischen Detektor erfassten Anteilen. Je nach konkreter Ausgestaltungsform des Laserscanners können die wenigstens zwei optischen Detektoren unterschiedlich ausgestaltet sein. Vorzugsweise enthalten die wenigstens zwei optischen Detektoren jeweils eine Fotodiode, beispielsweise eine Avalanche-Fotodiode, APD. Der zeitliche Verlauf eines der Detektorsignale spiegelt daher den zeitlichen Verlauf der Anzahl von Photonen wider, die auf eine entsprechende optisch aktive Fläche des jeweiligen optischen Detektors treffen.

Die Detektorsignale weisen insbesondere Signalpulse auf, die auch als Echos bezeichnet werden können. Die Pulsweite eines Detektorsignals entspricht daher insbesondere einer Pulsweite eines entsprechenden Signalpulses. Die Pulsweite ist dabei gegeben durch einen Zeitdauer, während der die Amplitude des entsprechenden Detektorsignals einen Wert oberhalb eines vordefinierten Grenzwerts annimmt. Diese Pulsweite wird auch als Echopulsweite, EPW, bezeichnet.

Um das Verhältnis der Pulsweite des ersten Detektorsignals zu der Pulsweite des zweiten Detektorsignals zu bestimmen, kann die Recheneinheit beispielsweise einen Quotienten aus den entsprechenden Pulsweiten bilden.

Das Überprüfen der Funktionsfähigkeit der Sendeeinheit und/oder der Detektoreinheit kann insbesondere derart verstanden werden, dass anhand des Verhältnisses der Pulsweiten zueinander überprüft wird, ob gegenüber einem Normalbetrieb oder einem uneingeschränkten Betrieb beziehungsweise einer uneingeschränkten Funktion der Sendeeinheit und/oder der Detektoreinheit eine Einschränkung vorliegt.

Insbesondere hat die Anzahl von Photonen, die auf die aktive Oberfläche eines optischen Detektors trifft, Auswirkungen auf die Pulsform des entsprechenden Signalpulses und damit Auswirkungen auf die Pulsweite. Ist die Pulsweite daher unter reproduzierbaren Bedingungen, wie sie während der Prüfphase gegeben sind, anders als dies für einen regulären oder uneingeschränkten Betrieb zu erwarten ist, so kann auf eine eingeschränkte Funktionsfähigkeit der Sendeeinheit und/oder der Detektoreinheit geschlossen werden. Dies kann insbesondere durch die teilweise oder vollständige Verdeckung einer Lichtquelle der Sendeeinheit oder eines der optischen Detektoren, also insbesondere einer aktiven Oberfläche eines der optischen Detektoren, verursacht werden.

Liegt keine Funktionseinschränkung vor, so weist der Wert des Verhältnisses der Pulsweiten zueinander einen bestimmten beziehungsweise vorab bestimmbaren Wert auf. Dieser Wert kann beispielsweise im Rahmen einer Kalibrierung bestimmt werden. Wird nun die aktive Oberfläche des ersten optischen Detektors, also desjenigen optischen Detektors, der das erste Detektorsignal erzeugt, durch ein Partikel verdeckt, so detektiert dieser optische Detektor weniger Photonen, was in der Konsequenz zu einer verringerten Pulsweite führen kann. Der Wert des Verhältnisses wird daher kleiner. Wird dagegen die aktive Oberfläche des zweiten optischen Detektors verdeckt, also desjenigen optischen Detektors, der das zweite Detektorsignal erzeugt, so wird der Wert des Verhältnisses entsprechend größer. Durch die Analyse des Werts des Verhältnisses, insbesondere im Vergleich zu einem während der Kalibrierung oder anderweitig bestimmten Referenzverhältnis, kann die Recheneinheit auf die Funktionsfähigkeit beziehungsweise eine Einschränkung der Funktionsfähigkeit, insbesondere durch eine Kontamination durch Partikel wie beschrieben, schließen. Außerdem kann die Recheneinheit anhand des Verhältnisses auch bestimmen, welcher der beiden optischen Detektoren im skizzierten Beispiel verdeckt ist.

Zudem kann die Größe der Abweichung des Werts des Verhältnisses von dem zu erwartenden Wert bei uneingeschränkter Funktion eine Aussage darüber zulassen, wie stark die Funktionseinschränkung ist, wie stark also der entsprechende optische Detektor durch das Partikel verdeckt wird. Je stärker die Verdeckung desto weniger Photonen werden von dem entsprechenden optischen Detektor detektiert und desto geringer wird die Pulsweite, was in der Konsequenz eine entsprechend stärkere Abweichung des Verhältnisses zur Folge hat.

Je nach konkreter Ausgestaltung des Laserscanners können einzelne optische Detektoren einer bestimmten Lichtquelle der Sendeeinheit zugeordnet sein, während andere optische Detektoren dieser Lichtquelle nicht zugeordnet sind. Dies kann insbesondere der Fall sein, wenn die Sendeeinheit mehrere Lichtquellen aufweist, so dass unterschiedliche optische Detektoren unterschiedlichen Lichtquellen zugeordnet sind. Die einer bestimmten Lichtquelle zugeordneten optischen Detektoren erfassen dann nur gestreute oder reflektierte Anteile von Licht, welches mittels der entsprechenden zugeordneten Lichtquelle ausgesendet wird. Dies kann beispielsweise durch eine zeitlich versetzte Steuerung des Aussendens der Lasersignale beziehungsweise der Prüfsignale durch unterschiedliche Lichtquellen realisiert werden.

In solchen Ausführungsformen kann anhand des Verhältnisses gegebenenfalls auch auf eine funktionale Einschränkung einer der Lichtquellen geschlossen werden. Ist beispielsweise eine Lichtquelle durch ein Partikel verdeckt oder sonst kontaminiert, so wird sich dies in dem Wert des Verhältnisses der Pulsweiten genau dann auswirken, wenn einer der optischen Detektoren, die das erste beziehungsweise das zweite Detektorsignal erzeugen, dieser Lichtquelle zugeordnet ist.

Dadurch, dass das Verhältnis der Pulsweiten sowohl Rückschlüsse über die involvierten optischen Detektoren als auch über die Stärke der Funktionseinschränkung beziehungsweise Kontamination und gegebenenfalls betreffend die zugeordneten Lichtquellen ermöglicht, erlaubt das verbesserte Konzept eine spezifischere Kategorisierung oder Bestimmung der Funktionseinschränkung.

Ein Vorteil der Berücksichtigung des Verhältnisses der Pulsweiten ist die Invarianz dieses Verhältnisses bezüglich sonstiger Einflussgrößen, wie beispielsweise der optischen Strahlungsleistung, mit der das Prüfsignal durch die Sendeeinheit emittiert wird, beispielsweise die optische Laserausgangsleistung, einer Vorspannung, mit der die optischen Detektoren betrieben werden, beispielsweise einer Sperrspannung, mit der die entsprechenden Fotodioden beziehungsweise APDs betrieben werden, einer Umgebungstemperatur, einer Komponententemperatur oder Umgebungslicht.

Dadurch lässt sich anhand des Verhältnisses die Funktionsfähigkeit besonders zuverlässig und reproduzierbar beurteilen.

Gemäß zumindest einer Ausführungsform des Verfahrens zur Funktionsüberprüfung eines Laserscanners nach dem verbesserten Konzept beinhaltet das Überprüfen der Funktionsfähigkeit, dass das Verhältnis mittels der Recheneinheit mit einem vordefinierten Referenzverhältnis verglichen wird und abhängig von einem Ergebnis des Vergleichs, insbesondere mittels der Recheneinheit, ein Fehlersignal erzeugt wird.

Bei dem Referenzverhältnis kann es sich dabei insbesondere um das Verhältnis der Pulsweiten der Detektorsignale des ersten beziehungsweise des zweiten optischen Detektors zu einem früheren Zeitpunkt, beispielsweise während eines Kalibrierungsvorgangs, handeln. Der Vergleich des Verhältnisses mit dem Referenzverhältnis kann beispielsweise auch durch Quotientenbildung erfolgen. Gibt es keinerlei Abweichung des Verhältnisses von dem Referenzverhältnis, so ist der Quotient entsprechend gleich 1. Abweichungen des Quotienten von 1, die insbesondere einen vordefinierten Toleranzwert überschreiten, deuten auf die eingeschränkte Funktionalität des ersten beziehungsweise zweiten optischen Detektors beziehungsweise einer zugeordneten Lichtquelle hin.

Dadurch wird die Überprüfung der Funktionsfähigkeit erleichtert, da nicht der Absolutwert des Verhältnisses bewertet werden muss, sondern dessen Größe bezüglich dessen Referenzverhältnisses.

In verschiedenen Ausführungsformen kann das Referenzverhältnis auch aktualisiert oder periodisch aktualisiert werden, beispielsweise beim Aktivieren oder Deaktivieren des Laserscanners. Falls insbesondere keine signifikante Beeinträchtigung der Funktionsfähigkeit der Sendeeinheit und/oder der Detektoreinheit festgestellt wird, kann das bestimmte Verhältnis der Pulsweiten als neues Referenzverhältnis definiert und gespeichert werden. Dadurch können Effekte durch die reguläre Alterung der Komponenten, insbesondere der optischen Detektoren, kompensiert werden.

Gemäß zumindest einer Ausführungsform wird mittels der Recheneinheit für jedes Paar von Detektorsignalen der wenigstens zwei Detektorsignale ein Verhältnis der Pulsweiten der Detektorsignale des jeweiligen Paars zueinander bestimmt. Die Funktionsfähigkeit wird basierend auf den Verhältnissen der Paare von Detektorsignalen, insbesondere basierend auf allen Verhältnissen der Paare von Detektorsignalen, überprüft.

Bei einer Gesamtanzahl von N optischen Detektoren der wenigstens zwei optischen Detektoren der Detektoreinheit ergeben sich nominell N² Verhältnisse, wobei diese auch Verhältnisse der Pulsweiten der verschiedenen Detektorsignale zu sich selbst beinhalten sowie für jedes Verhältnis ein inverses Verhältnis. Dementsprechend ergeben sich N²/2 - N relevante Werte für entsprechende Verhältnisse. Je nach Art der Verarbeitung und Speicherung kann es jedoch vorteilhaft sein, die Verhältnisse in Matrixform mit N² Einträgen darzustellen. Dabei können benachbarte Reihen beziehungsweise Spalten in der Matrix mit Vorteil physikalisch benachbart angeordneten optischen Detektoren entsprechen, so dass geometrische Effekte in der Matrix widergespiegelt werden und so gegebenenfalls leichter erkennbar sind.

Durch die Berücksichtigung der Verhältnisse von Pulsweiten für alle Paare von Detektorsignalen kann die Funktionsfähigkeit der Sendeeinheit und der Detektoreinheit umfassender und zuverlässiger überprüft werden, da sich die Kontamination oder sonstige Funktionsbeeinträchtigung eines oder mehrerer beliebiger optischer Detektoren oder Lichtquellen nachvollziehen lässt.

Gemäß zumindest einer Ausführungsform beinhaltet es das Überprüfen der Funktionsfähigkeit, dass mittels der Recheneinheit jedes der Verhältnisse mit einem jeweiligen vordefinierten Referenzwert verglichen wird beziehungsweise gemäß dem vordefinierten Referenzwert normiert wird und die Funktionsfähigkeit basierend auf den normierten Verhältnissen der Paare von Detektorsignalen überprüft wird beziehungsweise basierend auf jeweiligen Ergebnissen der Vergleiche.

Bezüglich der Referenzwerte für die Verhältnisse gelten die obigen Ausführungen analog. Die Referenzwerte für unterschiedliche Paare von Detektorsignalen können dabei voneinander verschieden sein. Das Normieren kann beispielsweise als Quotientenbildung des jeweiligen Verhältnisses mit dem entsprechenden Referenzwert verstanden werden.

Gemäß zumindest einer Ausführungsform beinhaltet es das Überprüfen der Funktionsfähigkeit, dass mittels der Recheneinheit abhängig von den Verhältnissen oder den normierten Verhältnissen eines der wenigstens zwei Detektorsignale identifiziert wird, insbesondere genau eines der wenigstens zwei Detektorsignale, wobei das Verhältnis jedes Paars, welches das identifizierte Detektorsignal beinhaltet, um wenigstens einen vordefinierten Schwellwert von dem zugehörigen vordefinierten Referenzverhältnis abweicht.

Mit anderen Worten wird aus der Vielzahl von Verhältnissen der Paare von Detektorsignalen bestimmt, ob für ein Detektorsignal der wenigstens zwei Detektorsignale jedes Verhältnis um wenigstens den Schwellwert von dem Referenzverhältnis abweicht. Ist dies der Fall, so kann davon ausgegangen werden, dass die Funktionsfähigkeit des optischen Detektors, welcher das identifizierte Detektorsignal erzeugt, eingeschränkt ist. Dem kommt hierbei zugute, dass die Wahrscheinlichkeit, dass gleichzeitig die Funktionsfähigkeit mehrerer optischer Detektoren, beispielsweise durch Kontamination, eingeschränkt beziehungsweise signifikant eingeschränkt ist.

Im Bild der oben skizzierten Matrix führt die Einschränkung der Funktionsfähigkeit eines einzelnen optischen Detektors dazu, dass sämtliche Werte in genau einer Spalte und sämtliche Werte in genau einer Zeile von dem entsprechenden Referenzwert signifikant abweichen, also um mehr als den Schwellwert abweichen, mit Ausnahme des Verhältnisses der Pulsweite des identifizierten Detektorsignals mit sich selbst, die zwingend stets gleich 1 bleibt.

Indem beispielsweise bestimmt wird, wie stark oder um welchen Wert das jeweilige Verhältnis von dem Referenzverhältnis abweicht, kann in verschiedenen Ausführungsformen auch die Stärke der Einschränkung der Funktionsfähigkeit, beispielsweise die Stärke der Kontamination, quantifiziert werden. Je stärker die aktive Oberfläche eines optischen Detektors kontaminiert ist, desto weniger Photonen können entsprechend registriert werden und desto stärker sinkt dementsprechend auch die Pulsweite ab. Beispielsweise können neben dem Schwellwert einer oder mehrere weitere Schwellwerte vorgesehen sein, um das Verhältnis in entsprechende Bereich einordnen zu können, um die Stärke der Einschränkung der Funktionsfähigkeit quantifizieren zu können.

Gemäß zumindest einer Ausführungsform wird, insbesondere mittels der Recheneinheit, eine eingeschränkte Funktionsfähigkeit eines dem identifizierten Detektorsignal zugeordneten optischen Detektors der wenigstens zwei optischen Detektoren identifiziert. Der zugeordnete optische Detektor ist dabei insbesondere derjenige, der das identifizierte Detektorsignal erzeugt.

Gemäß zumindest einer Ausführungsform beinhaltet es das Überprüfen der Funktionsfähigkeit, dass mittels der Recheneinheit abhängig von den Verhältnissen beziehungsweise den normierten Verhältnissen eine Gruppe der wenigstens zwei Detektorsignale, also zwei oder mehr der wenigstens zwei Detektorsignale, identifiziert wird, wobei das Verhältnis jedes Paars, welches ein Detektorsignal der identifizierten Gruppe und ein Detektorsignal, das nicht Teil der identifizierten Gruppe ist, beinhaltet, um wenigstens einen vordefinierten Schwellwert von einem zugehörigen vordefinierten Referenzverhältnis abweicht.

Die Verhältnisse von zwei Detektorsignalen, die beide der identifizierten Gruppe angehören, sind, die entsprechende Normierung vorausgesetzt, insbesondere näherungsweise gleich 1 weichen also jedenfalls um weniger als den vordefinierten Schwellwert von dem entsprechenden Referenzverhältnis ab.

Im Bild der oben skizzierten Matrix bedeutet dies, dass für eine Anzahl, die der Größe der Gruppe entspricht, von Spalten sowie für eine entsprechende Anzahl von Zeilen jeweils eine Abweichung um mehr als dem Schwellwert vorliegt, ausgenommen der Bereich, in dem sich die Zeilen und Spalten überschneiden. Je nach Definition der Matrix können dabei beispielsweise aufeinanderfolgende Spalten oder Zeilen die Gruppe widerspiegeln.

Gemäß zumindest einer Ausführungsform wird, insbesondere mittels der Recheneinheit, eine eingeschränkte Funktionsfähigkeit einer der identifizierten Gruppe zugeordneten Lichtquelle der Sendeeinheit identifiziert.

Eine solche Analyse bietet sich insbesondere an, wenn die Sendeeinheit zwei oder mehr Lichtquellen, insbesondere Laserdioden, beinhaltet, wobei jede Lichtquelle einer Gruppe von optischen Detektoren und damit auch einer Gruppe von Detektorsignalen zugeordnet ist. Die der entsprechenden Lichtquelle zugeordneten optischen Detektoren detektieren dabei nur reflektierte beziehungsweise gestreute Anteile von Lasersignalen beziehungsweise Prüfsignalen der zugeordneten Lichtquelle und keine entsprechenden Anteile der weiteren Lichtquellen. Dies kann beispielsweise durch getaktetes und zeitlich versetztes Aussenden der verschiedenen Lasersignale durch unterschiedliche Lichtquellen realisiert werden.

Durch eine solche Konstruktion können besonders viele optische Detektoren eingesetzt werden, ohne die individuelle optische Ausgangsleistung einer Lichtquelle zu stark erhöhen zu müssen. Durch die erhöhte Anzahl von optischen Detektoren kann wiederum das Sichtfeld des Laserscanners, also dessen Detektionswinkelbereich, vergrößert werden.

Ist nun eine einzelne Lichtquelle in ihrer Funktionsfähigkeit eingeschränkt, beispielsweise durch Kontamination, so wirkt sich dies auf die empfangene Photonenzahl aller zugeordneten optischen Detektoren näherungsweise gleich stark aus. Auf die nicht zugeordneten Detektoren wirkt sich die Einschränkung dieser Lichtquelle dagegen nicht aus. Auch hier kann mit hoher Zuverlässigkeit davon ausgegangen werden, dass nur eine Lichtquelle der zwei oder mehr Lichtquellen signifikant beeinträchtigt ist. Die Größe der Gruppe der identifizierten Detektorsignale ist dementsprechend gleich der Anzahl der optischen Detektoren, die der entsprechend eingeschränkten Lichtquelle zugeordnet sind.

Gemäß zumindest einer Ausführungsform beinhaltet die Sendeeinheit zwei oder mehr Lichtquellen, insbesondere Laserlichtquellen oder Laserdioden. Jeder der mindestens zwei Lichtquellen ist einer oder sind mehrere der wenigstens zwei optischen Detektoren zugeordnet, vorzugsweise sind jeder der Lichtquellen wenigstens zwei optischen Detektoren zugeordnet.

Beispielsweise kann die Anzahl der wenigstens zwei optischen Detektoren einem ganzzahligen Vielfachen der Anzahl der wenigstens zwei Lichtquellen entsprechen, so dass einer Lichtquelle gleich viele optische Detektoren zugeordnet sein können.

Gemäß zumindest einer Ausführungsform beinhaltet die Sendeeinheit N_{L}-Lichtquellen und N_{L}*M optische Detektoren, wobei M der Anzahl einer der Lichtquellen zugeordneten optischen Detektoren entspricht.

Sind nun in der oben beschriebenen Weise M Spalten sowie M Zeilen der Matrix betroffen, so kann davon ausgegangen werden, dass die entsprechende Lichtquelle in ihrer Funktionsfähigkeit eingeschränkt beziehungsweise kontaminiert ist.

Gemäß dem verbesserten Konzept wird auch eine Laserscannervorrichtung mit einer Recheneinheit und einem Laserscanner angegeben. Der Laserscanner weist ein Gehäuse mit einem lichtdurchlässigen Fenster auf sowie eine innerhalb des Gehäuses angeordnete Sendeeinheit zum Aussenden von Lasersignalen. Der Laserscanner weist eine Steuereinheit auf sowie eine bewegliche Umlenkeinheit zur Umlenkung der Lasersignale und eine innerhalb des Gehäuses angeordnete Detektoreinheit mit zwei oder mehr optischen Detektoren. Die Steuereinheit ist dazu eingerichtet, die Sendeeinheit anzusteuern, um während einer Prüfphase wenigstens ein Prüfsignal zu senden. Die Steuereinheit ist außerdem dazu eingerichtet, die Umlenkeinheit anzusteuern, so dass die Umlenkeinheit während der Prüfphase bezüglich der Sendeeinheit derart ausgerichtet ist, dass das wenigstens eine Prüfsignal nicht auf das Fenster gelenkt wird. Die wenigstens zwei optischen Detektoren sind dazu eingerichtet, reflektierte und/oder gestreute Anteile des wenigstens einen Prüfsignals zu erfassen und basierend auf den erfassten Anteilen wenigstens zwei Detektorsignale zu erzeugen. Die Recheneinheit ist dazu eingerichtet, für jedes der wenigstens zwei Detektorsignale eine Pulsweite zu bestimmen und ein Verhältnis der Pulsweite eines ersten Detektorsignals der wenigstens zwei Detektorsignale zu der Pulsweite eines zweiten Detektorsignals der wenigstens zwei Detektorsignale zu bestimmen. Die Recheneinheit ist dazu eingerichtet, eine Funktionsfähigkeit der Sendeeinheit und/oder der Detektoreinheit basierend auf dem Verhältnis zu überprüfen.

Die Recheneinheit kann dabei Teil des Laserscanners sein oder separat zu diesem vorgesehen sein. Ist die Laserscannervorrichtung für den Einsatz in einem oder an einem Kraftfahrzeug vorgesehen, so kann die Recheneinheit beispielsweise als elektronisches Steuergerät des Kraftfahrzeugs implementiert sein. Die Steuereinheit kann gegebenenfalls auch Teil der Recheneinheit sein. Insbesondere können beschriebene Funktionen oder Aufgaben der Recheneinheit in verschiedenen Ausführungsformen von der Steuereinheit übernommen werden oder umgekehrt.

Gemäß zumindest einer Ausführungsform der Laserscannervorrichtung beinhaltet die Umlenkeinheit einen drehbaren oder schwenkbaren Spiegel oder ein mikroelektromechanisches Spiegelsystem, also einen Spiegel, der als mikroelektromechanisches System, MEMS, ausgestaltet ist.

Insbesondere kann die Steuereinheit die Umlenkeinheit während der Prüfphase derart ansteuern, dass von der Sendeeinheit entsprechend ausgesendete Prüfsignale nicht auf eine spiegelnde Oberfläche der Umlenkeinheit, insbesondere des Spiegels, treffen oder von der spiegelnden Oberfläche in einen Bereich innerhalb des Gehäuses umgelenkt werden, der nicht dem Fenster entspricht.

In verschiedenen Ausführungsformen beinhaltet der schwenk- oder drehbare Spiegel einen Spiegelkörper, der insbesondere im Wesentlichen quaderförmig ausgestaltet sein kann, wobei sich auf einer Seitenfläche des Quaders eine spiegelnde Oberfläche befindet. In verschiedenen Ausgestaltungsformen kann auf einer der spiegelnden Oberfläche gegenüberliegenden Seite des Quaders eine weitere spiegelnde Oberfläche angeordnet sein. Der Spiegelkörper ist um eine Rotationsachse drehbar oder schwenkbar gelagert, die insbesondere durch zwei weitere gegenüberliegende Seitenflächen des Quaders tritt. Die verbleibenden beiden Seitenflächen des Quaders, die also weder einer spiegelnden Oberfläche noch einer Seitenfläche, durch welche die Rotationsachse tritt, entsprechen, können beispielsweise als Stirnseiten bezeichnet werden.

In verschiedenen Ausführungsformen ist die Steuereinheit dazu eingerichtet, die Umlenkeinheit während der Prüfphase derart anzusteuern, dass die ausgesendeten Prüfsignale auf eine der Stirnseiten treffen.

Gemäß zumindest einer Ausführungsform weist die Sendeeinheit wenigstens zwei Lichtquellen auf, wobei jede Lichtquelle der wenigstens zwei Lichtquellen mindestens einem optischen Detektor der wenigstens zwei optischen Detektoren zugeordnet ist, und jeder optische Detektor der wenigstens zwei optischen Detektoren ist genau einer Lichtquelle der wenigstens zwei Lichtquellen zugeordnet.

In diesem Zusammenhang wird auf die entsprechenden Ausführungen zu dem Verfahren nach dem verbesserten Konzept verwiesen.

Gemäß zumindest einer Ausführungsform ist die Steuereinheit dazu eingerichtet, die Sendeeinheit derart anzusteuern, dass wenigstens zwei Lichtquellen jeweilige Prüfsignale des wenigstens einen Prüfsignals zeitlich versetzt senden.

Mit anderen Worten beinhaltet das wenigstens eine Prüfsignal ein Prüfsignal pro Lichtquelle. Prüfsignale unterschiedlicher Lichtquellen werden dabei zeitlich versetzt zueinander ausgesendet, so dass diese zeitlich nicht überlappen und dementsprechend zu jedem Zeitpunkt nur reflektierte Anteile einer definierten Lichtquelle durch die wenigstens zwei optischen Detektoren detektiert werden können.

Gemäß zumindest einer Ausführungsform ist die Recheneinheit dazu eingerichtet, für jedes Paar von Detektorsignalen der wenigstens zwei Detektorsignale ein Verhältnis der Pulsweiten der Detektorsignale des jeweiligen Paars zueinander zu bestimmen und die Funktionsfähigkeit basierend auf den Verhältnissen der Paare von Detektorsignalen zu überprüfen.

Gemäß zumindest einer Ausführungsform ist die Recheneinheit dazu eingerichtet, abhängig von den Verhältnissen eines der wenigstens zwei Detektorsignale zu identifizieren, insbesondere genau eines der wenigstens zwei Detektorsignale zu identifizieren, wobei das Verhältnis jedes Paars, welches das identifizierte Detektorsignal beinhaltet, um wenigstens einen vordefinierten ersten Schwellwert von einem zugehörigen vordefinierten Referenzverhältnis abweicht.

Gemäß zumindest einer Ausführungsform ist die Recheneinheit dazu eingerichtet, abhängig von den Verhältnissen eine Gruppe der wenigstens zwei Detektorsignale zu identifizieren, wobei das Verhältnis jedes Paars, welches ein Detektorsignal der identifizierten Gruppe und ein Detektorsignal, das nicht Teil der identifizierten Gruppe ist, beinhaltet, um wenigstens einen vordefinierten zweiten Schwellwert von einem zugehörigen vordefinierten Referenzverhältnis abweicht.

Weitere Ausführungsformen der Laserscannervorrichtung folgen direkt aus den verschiedenen Ausgestaltungsformen des Verhältnisses nach dem verbesserten Konzept und umgekehrt. Insbesondere kann eine Laserscannervorrichtung nach dem verbesserten Konzept dazu eingerichtet oder programmiert sein, ein Verfahren nach dem verbesserten Konzept durchzuführen oder die Laserscannervorrichtung führt ein solches Verfahren durch.

Gemäß dem verbesserten Konzept wird auch ein Kraftfahrzeug angegeben, das eine Ausführungsform einer Laserscannervorrichtung nach dem verbesserten Konzept beinhaltet.

Gemäß dem verbesserten Konzept wird auch ein Computerprogramm mit Befehlen angegeben. Wenn die Befehle beziehungsweise das Computerprogramm durch eine Laserscannervorrichtung nach dem verbesserten Konzept ausgeführt werden, veranlassen die Befehle die Laserscannervorrichtung dazu, ein Verfahren nach dem verbesserten Konzept auszuführen.

Gemäß dem verbesserten Konzept wird auch computerlesbares Speichermedium angegeben, welches ein Computerprogramm nach dem verbesserten Konzept speichert.

Computerprogramme sowie computerlesbare Speichermedien nach dem verbesserten Konzept können als jeweilige Computerprogrammprodukte mit den Befehlen bezeichnet werden.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen können nicht nur in der jeweils angegebenen Kombination, sondern auch in anderen Kombinationen von dem verbesserten Konzept umfasst sein. Es sind somit auch solche Ausführungen des verbesserten Konzepts umfasst und offenbart, die in den Figuren nicht explizit gezeigt und/oder erläutert sind, jedoch durch separierte Merkmalskombinationen aus den erläuterten Ausführungen hervorgehen und erzeugbar sind.

In den Figuren zeigen:
- Fig. 1: eine schematische Darstellung eines Kraftfahrzeugs mit einer beispielhaften Ausführungsform einer Laserscannervorrichtung nach dem verbesserten Konzept;
- Fig. 2: eine schematische Darstellung einer weiteren beispielhaften Ausführungsform einer Laserscannervorrichtung nach dem verbesserten Konzept;
- Fig. 3: schematische Darstellungen einer Sendeeinheit einer weiteren beispielhaften Ausführungsform einer Laserscannervorrichtung nach dem verbesserten Konzept;
- Fig. 4: schematisch einen Teil einer weiteren beispielhaften Ausführungsform einer Laserscannervorrichtung nach dem verbesserten Konzept in einer Scanphase;
- Fig. 5: eine schematische Darstellung einer weiteren beispielhaften Ausführungsform einer Laserscannervorrichtung nach dem verbesserten Konzept in einer Prüfphase;
- Fig. 6a: eine schematische Darstellung von Pulsweiten; und
- Fig. 6b: eine weitere schematische Darstellung von Pulsweiten.

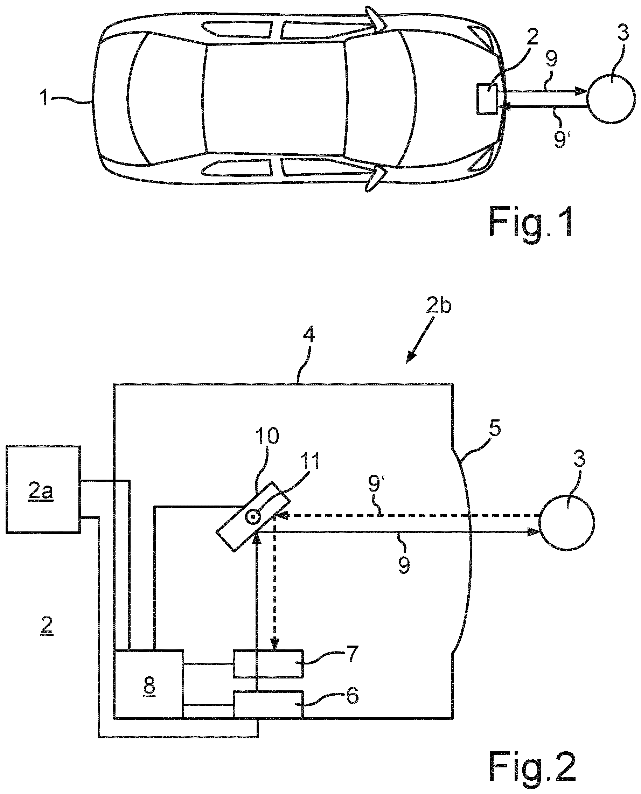

In Fig. 1 ist schematisch eine beispielhafte Ausführungsform eines Kraftfahrzeugs 1 nach dem verbesserten Konzept dargestellt. Das Kraftfahrzeug 1 beinhaltet eine Laserscannervorrichtung 2 entsprechend einer beispielhaften Ausführungsform nach dem verbesserten Konzept. Die Laserscannervorrichtung 2 kann Lasersignale 9 in eine Umgebung des Kraftfahrzeugs 1 aussenden und von einem Objekt 3 in der Umgebung reflektierte Anteile 9' der Lasersignale detektieren. Basierend auf den detektierten reflektierten Anteilen 9' kann die Laserscannervorrichtung 2 eine Position und/oder Entfernung des Objekts 3 von der Laserscannervorrichtung 2 bestimmen. Dies kann beispielsweise basierend auf dem Konzept der Lichtlaufzeitmessung, ToF (englisch: "Time of Flight"), durchgeführt werden.

Fig. 2 zeigt schematisch ein Blockdiagramm einer beispielhaften Ausführungsform einer Laserscannervorrichtung 2, beispielsweise der Laserscannervorrichtung 2 des Kraftfahrzeugs 1 aus Fig. 1. Die Laserscannervorrichtung 2 weist einen Laserscanner 2b auf sowie eine mit dem Laserscanner 2b verbundene Recheneinheit 2a, die beispielsweise als elektronisches Steuergerät des Kraftfahrzeugs 1 ausgebildet sein kann. Der Laserscanner 2b weist ein Gehäuse 4 mit einem lichtdurchlässigen Fenster 5 auf und eine innerhalb des Gehäuses 4 angeordnete Sendeeinheit 6 zum Aussenden der Lasersignale 9 durch das lichtdurchlässige Fenster 5. Der Laserscanner 2b enthält eine Steuereinheit 8, die mit der Recheneinheit 2a verbunden ist sowie mit der Sendeeinheit 6, um diese zum Aussenden der Lasersignale 9 anzusteuern. Der Laserscanner 2b enthält auch eine Detektoreinheit 7 mit wenigstens zwei optischen Detektoren, die insbesondere als Fotodioden, beispielsweise als APDs, ausgestaltet sind. Die Sendeeinheit 6 beinhaltet wenigstens eine Lichtquelle, insbesondere Laserquelle, beispielsweise wenigstens eine Infrarotlaserdiode.

Die Detektoreinheit 7 kann die reflektierten Anteile 9' der Lasersignale 9 detektieren, und basierend darauf kann jeder der wenigstens zwei optischen Detektoren ein entsprechendes Detektorsignal erzeugen und an die Steuereinheit 8 und/oder die Recheneinheit 2a übermitteln.

Der Laserscanner 2b beinhaltet außerdem eine Umlenkeinheit, die beispielsweise einen um eine Rotationsachse 11 drehbar gelagerten Spiegel 10 aufweisen kann. Die Rotationsachse 11 steht in Fig. 2 senkrecht zur Zeichenebene. Die Umlenkeinheit ist ebenfalls mit der Steuereinheit 8 verbunden und die Steuereinheit 8 kann dementsprechend die Umlenkeinheit ansteuern, so dass der Spiegel 10 um die Rotationsachse 11 gedreht wird. Durch die Rotation des Spiegels 10 kann so der Aussendewinkel der Lasersignale 9 variiert werden. Ein Empfangspfad für die reflektierten Anteile 9' der Lasersignale 9, die beispielsweise von dem Objekt 3 reflektiert wurden, führt über den Spiegel 10 zu der Detektoreinheit 7, insbesondere zu einer aktiven Oberfläche eines der optischen Detektoren. Die reflektierten Anteile 9' werden dann von dem entsprechenden optischen Detektor erfasst, so dass durch Rotation des Spiegels 10 um die Rotationsachse 11 jeder der optischen Detektoren aus unterschiedlichen Richtungen einfallende reflektierte Anteile 9' der Lasersignale 9 detektieren kann. Die Momentanposition des Spiegels 10 kann dabei beispielsweise über einen mit der Rotationsachse 11 beziehungsweise einer entsprechenden Welle gekoppelten Drehgeber (nicht dargestellt) bestimmt werden.

Indem die Momentanposition des Spiegels 10 beispielsweise zu jedem Zeitpunkt bekannt ist, kann über die zeitliche Abfolge der detektierten reflektierten Anteile 9' eine Menge von Abtastpunkten, die auch als Punktwolke bezeichnet wird, erzeugt werden. Dabei wird mittels jedes optischen Detektors eine Untermenge der Abtastpunkte beziehungsweise der Punktwolke erzeugt. Eine Untermenge von Abtastpunkten, die mittels eines der optischen Detektoren erzeugt wird, kann auch als Lage von Abtastpunkten bezeichnet werden.

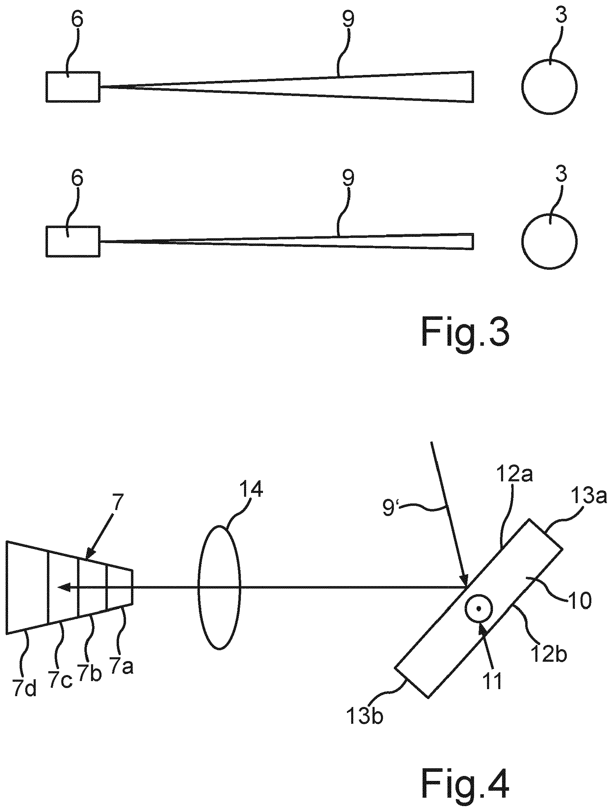

In Fig. 3 sind schematisch die Sendeeinheit 6 des Laserscanners 2b aus Fig. 2 sowie die Lasersignale 9 und das Objekt 3 gezeigt. Die obere Abbildung in Fig. 3 entspricht beispielsweise einer Seitenansicht, also einer Ansicht mit Blickrichtung senkrecht zu der Rotationsachse des Spiegels 10. Die untere Abbildung in Fig. 3 entspricht beispielsweise einer Draufsicht auf die Sendeeinheit 6, also einer Ansicht mit Blickrichtung parallel zu der Rotationsachse des Spiegels 10. Wie aus den Abbildungen der Fig. 3 erkennbar ist, kann eine jeweilige Strahlaufweitung der Lasersignale 9 in unterschiedlichen Ebenen unterschiedlich ausfallen.

In Fig. 4 sind die Detektoreinheit 7 und der Spiegel 10 des Laserscanners 2b der Fig. 2 schematisch nochmals dargestellt, wobei der Empfangspfad der reflektierten Anteile 9' angedeutet ist. Optional kann der Laserscanner 2b eine Linsenanordnung 14 zur Strahlführung aufweisen, die im Empfangspfad für die reflektierten Anteile 9' angeordnet ist.

Im Beispiel der Fig. 4 sind vier optische Detektoren 7a, 7b, 7c, 7d der Detektoreinheit 7 dargestellt, die beispielsweise linear nebeneinander angeordnet sind. Beispielsweise kann die Sendeeinheit 6 zwei oder mehr Lichtquellen aufweisen, wobei jeder Lichtquelle zwei oder mehr der optischen Detektoren 7a, 7b, 7c, 7d zugeordnet sind.

In Fig. 4 weist der Spiegel 10 einen näherungsweise oder im Wesentlichen quaderförmigen Spiegelkörper auf. Die Seitenflächen des Spiegelkörpers müssen dabei jedoch nicht notwendigerweise Ebenen sein, sondern können beispielsweise auch gekrümmt sein. Der Spiegel 10 weist beispielsweise zwei gegenüberliegende spiegelnde Seiten 12a, 12b auf, die parallel zu der Rotationsachse 11 angeordnet sind. Senkrecht zu den spiegelnden Seiten 12a, 12b und ebenfalls parallel zur Rotationsachse 11 sind zwei nicht spiegelnde Stirnseiten 13a, 13b des Spiegelkörpers angeordnet.

In Fig. 4 ist der Laserscanner 2b beispielsweise während einer Scanphase dargestellt. Die Sendeeinheit 6 emittiert die Lasersignale 9, welche auf eine der spiegelnden Flächen 12a, 12b treffen und, wie auch in Fig. 2 schematisch dargestellt, durch die Umlenkeinheit auf das Fenster 5 gelenkt werden, so dass diese das Gehäuse 4 verlassen können. Die reflektierten Anteile 9' treffen ebenfalls auf die spiegelnde Fläche 12a, 12b und werden dementsprechend auf die Detektoreinheit 7 umgelenkt.

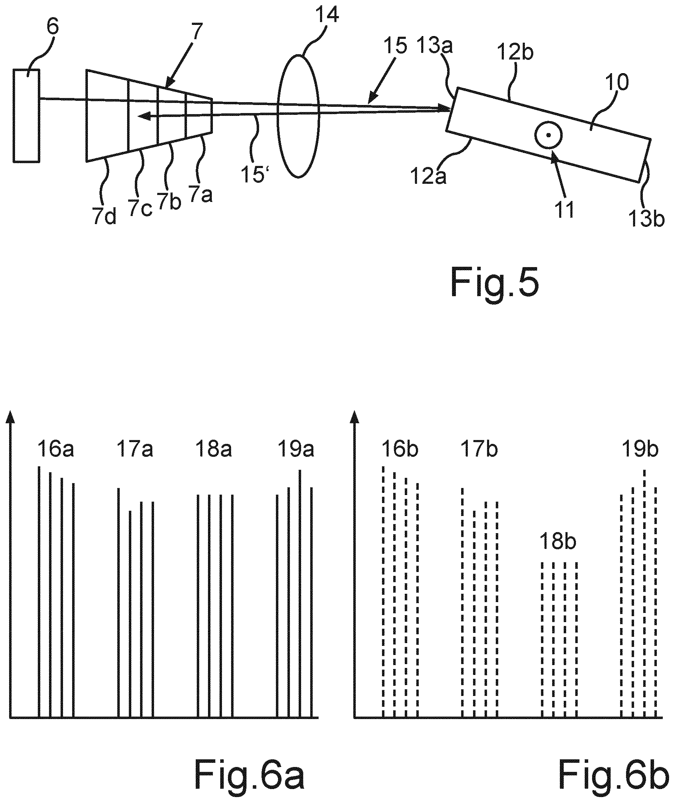

In Fig. 5 ist der Laserscanner 2b während einer Prüfphase dargestellt. Während der Prüfphase ist der Spiegel 10 bezüglich der Sendeeinheit 6 derart ausgerichtet, dass die während der Prüfphase emittierten Prüfsignale 15 auf eine der Stirnseiten 13a, 13b treffen und dementsprechend nicht in Richtung des Fensters 5 gelenkt werden, sondern stattdessen innerhalb des Gehäuses 4 mehrfach reflektiert beziehungsweise gestreut werden. Die entsprechend mehrfach reflektierten und gestreuten Anteile 15' des Prüfsignals 15 treffen wiederum auf die aktiven Oberflächen der optischen Detektoren 7a, 7b, 7c, 7d, die basierend darauf entsprechende Detektorsignale erzeugen und an die Recheneinheit übermitteln. Die Recheneinheit 2a bestimmt daraufhin für jedes der Detektorsignale eine entsprechende Pulsweite, die auch als Echopulsweite, EPW, bezeichnet werden kann. Die Recheneinheit 2a berechnet außerdem für jedes Paar von Detektorsignalen ein entsprechendes Verhältnis der Pulsweiten und vergleicht dieses Verhältnis mit einem entsprechenden jeweiligen vorgegebenen Referenzwert, beispielsweise durch Quotientenbildung. Die entsprechenden Quotienten können beispielsweise in Form einer Matrix dargestellt oder gespeichert werden. Die Struktur der Matrix ist dann beispielsweise wie folgt:

| | | | |
|---|---|---|---|
| EPW₁/EPW₁/R₁₁ | EPW₁/EPW₂/R₁₂ | EPW₁/EPW₃/R₁₃ | EPW₁/EPW₄/R₁₄ |
| EPW₂/EPW₁/R₂₁ | EPW₂/EPW₂/R₂₂ | EPW₂/EPW₃/R₂₃ | EPW₂/EPW₄/R₂₄ |
| EPW₃/EPW₁/R₃₁ | EPW₃/EPW₂/R₃₂ | EPW₃/EPW₃/R₃₃ | EPW₃/EPW₄/R₃₄ |
| EPW₄/EPW₁/R₄₁ | EPW₄/EPW₂/R₄₂ | EPW₄/EPW₃/R₄₃ | EPW₄/EPW₄/R₄₄ |

Dabei bezeichnet EPWᵢ mit i = 1, ..., 4 die Pulsweite des entsprechenden Detektorsignals. Rᵢⱼ mit i = 1, ..., 4 und j = 1, ..., 4 bezeichnet das Referenzverhältnis des entsprechenden Paars.

Im vorliegenden Beispiel weist der Laserscanner 2b eine Detektoreinheit 7 mit vier optischen Detektoren 7a, 7b, 7c, 7d auf sowie und eine Sendeeinheit 6 mit zwei Lichtquellen, wobei jede der Lichtquellen zwei der optischen Detektoren 7a, 7b, 7c, 7d zugeordnet ist.

Basierend auf den Verhältnissen der Pulsweiten kann die Recheneinheit 2a nun die Funktionsfähigkeit der Sendeeinheit 6 und/oder der Detektoreinheit 7 überprüfen, insbesondere eine Einschränkung der Funktionsfähigkeit, beispielsweise durch eine entsprechende Kontamination der Lichtquellen oder optischen Detektoren 7a, 7b, 7c, 7d,, feststellen. Liegt keinerlei Kontamination oder Einschränkung der Sendeeinheit beziehungsweise der Detektoreinheit 7 vor, so sind die Verhältnisse beispielsweise alle gleich dem entsprechenden Referenzverhältnis beziehungsweise die normierten Verhältnisse sind gleich 1. Ist beispielsweise die aktive Oberfläche eines einzigen optischen Detektors kontaminiert, so ergibt sich für die normierten Verhältnisse beispielhaft eine Struktur der Matrix wie folgt:

| | | | |
|---|---|---|---|
| 1 | 1 | >1 | 1 |
| 1 | 1 | >1 | 1 |
| <1 | <1 | 1 | <1 |
| 1 | 1 | >1 | 1 |

In diesem exemplarischen Beispiel sind die Werte in der dritten Spalte, mit Ausnahme des Eintrags für (i, j) = (3, 3) größer als 1, und die Werte in der dritten Zeile entsprechend kleiner als 1. Dies lässt darauf schließen, dass die Pulsweite des dritten Detektorsignals gegenüber allen anderen Pulsweiten reduziert ist, was wiederum auf eine Kontamination des entsprechenden optischen Detektors hinweist.

Ist dagegen eine der Lichtquellen der Sendeeinheit 6 kontaminiert, und die Lichtquelle ist mehreren optischen Detektoren zugeordnet, so ergibt sich folgende exemplarische Struktur der Matrix:

| | | | |
|---|---|---|---|
| 1 | 1 | >1 | >1 |
| 1 | 1 | >1 | >1 |
| <1 | <1 | 1 | 1 |
| <1 | <1 | 1 | 1 |

In diesem exemplarischen Beispiel sind die Werte der Spalten 3 und 4 jeweils größer als 1 sowie die der Zeilen 3 und 4 jeweils kleiner als 1, mit Ausnahme derjenigen Einträge zu (i, j) = (3, 3), (4, 3), (3, 4) und (4, 4). Dies weist nun daraufhin, dass die Pulsweiten des dritten und vierten Detektorsignals gegenüber den übrigen Pulsweiten reduziert sind. Da es erfahrungsgemäß sehr unwahrscheinlich ist, dass zwei optischen Detektoren kontaminiert sind, spricht eine solche Signatur der Matrix dafür, dass die den optischen Detektoren, welche das dritte und das vierte Detektorsignal erzeugen, zugeordnete Lichtquelle der Sendeeinheit 6 kontaminiert ist.

Die Situation einer kontaminierten Lichtquelle ist auch in den Figuren Fig. 6a und Fig. 6b veranschaulicht. In diesem Beispiel weist der Laserscanner 2b eine Detektoreinheit 7 mit 16 optischen Detektoren 7a, 7b, 7c, 7d auf sowie und eine Sendeeinheit 6 mit vier Lichtquellen, wobei jede der Lichtquellen vier der optischen Detektoren 7a, 7b, 7c, 7d zugeordnet ist.

Fig. 6a zeigt schematisch auf der Ordinate den Wert der Pulsweiten für die Detektorsignale der verschiedenen optischen Detektoren 7a, 7b, 7c, 7d, wobei beispielsweise 16a, 17a, 18a und 19a jeweils vier Pulsweiten entsprechender Detektorsignale ohne jede Kontamination der Lichtquelle beziehungsweise der optischen Detektoren 7a, 7b, 7c, 7d darstellen. In Fig. 6b entsprechen 16b, 17a, 18b und 19b den entsprechenden Pulsweiten, wobei eine der Lichtquellen kontaminiert ist. Insbesondere ist die diejenige Lichtquelle, welche den Pulsweiten 18b zugeordnet sind, kontaminiert. Die Pulsweiten 18b sind daher gegenüber den Pulsweiten 18a aus Fig. 6a jeweils reduziert, wohingegen die übrigen Pulsweiten 16b, 17b, 19b gegenüber den ursprünglichen 16a, 17a, 19a nicht reduziert sind.

Wie insbesondere bezüglich der Figuren, beschrieben, ermöglicht es das verbesserte Konzept, mit höherer Genauigkeit spezifische Funktionseinschränkungen eines Laserscanners, insbesondere durch Kontamination von Lichtquellen oder optischen Detektoren des Laserscanners, zu bestimmen. Dazu können charakteristische Muster oder Signaturen in den Verhältnissen der Pulsweiten der einzelnen optischen Detektoren zueinander analysiert werden. In verschiedenen Ausführungsformen wird dabei die, experimentell gut belegte, Annahme gemacht, dass die Wahrscheinlichkeit für ein Partikel, dass mehr als eine Lichtquelle verdeckt beziehungsweise dass mehrere optische Detektoren gleichzeitig verdeckt sind, gering ist.

## Patentansprüche

1. Verfahren zur Funktionsüberprüfung eines Laserscanners (2b), der ein Gehäuse (4) mit einem lichtdurchlässigen Fenster (5), eine innerhalb des Gehäuses (4) angeordnete Sendeeinheit (6) zum Aussenden von Lasersignalen (9), eine bewegliche Umlenkeinheit (10) zur Umlenkung der Lasersignale (9) sowie eine innerhalb des Gehäuses (4) angeordnete Detektoreinheit (7) aufweist, wobei gemäß dem Verfahren
- mittels der Sendeeinheit (6) während einer Prüfphase wenigstens ein Prüfsignal (15) gesendet wird;
- die Umlenkeinheit (10) während der Prüfphase bezüglich der Sendeeinheit (6) derart ausgerichtet wird, dass das wenigstens eine Prüfsignal (15) nicht auf das Fenster (5) gelenkt wird;
**dadurch gekennzeichnet, dass**
- Anteile (15') des wenigstens einen Prüfsignals (15) mittels wenigstens zwei optischen Detektoren (7a, 7b, 7c, 7d) der Detektoreinheit (7) erfasst werden und basierend auf den erfassten Anteilen (15') wenigstens zwei Detektorsignale erzeugt werden;
- mittels einer Recheneinheit (2a) für jedes der wenigstens zwei Detektorsignale eine Pulsweite bestimmt wird;
- mittels der Recheneinheit (2a) ein Verhältnis der Pulsweite eines ersten Detektorsignals der wenigstens zwei Detektorsignale zu der Pulsweite eines zweiten Detektorsignals der wenigstens zwei Detektorsignale bestimmt wird; und
- eine Funktionsfähigkeit der Sendeeinheit (6) und/oder der Detektoreinheit (7) basierend auf dem Verhältnis überprüft wird.

2. Verfahren nach Anspruch 1,
**dadurch gekennzeichnet, dass**
das Überprüfen der Funktionsfähigkeit beinhaltet, dass das Verhältnis mittels der Recheneinheit (2a) mit einem vordefinierten Referenzverhältnis verglichen wird und abhängig von einem Ergebnis des Vergleichs ein Fehlersignal erzeugt wird.

3. Verfahren nach einem der vorhergehenden Ansprüche,
**dadurch gekennzeichnet, dass**
- mittels der Recheneinheit (2a) für jedes Paar von Detektorsignalen der wenigstens zwei Detektorsignale ein Verhältnis der Pulsweiten der Detektorsignale des jeweiligen Paars zueinander bestimmt wird; und
- die Funktionsfähigkeit basierend auf den Verhältnissen der Paare von Detektorsignalen überprüft wird.

4. Verfahren nach Anspruch 3,
**dadurch gekennzeichnet, dass**
mittels der Recheneinheit (2a) abhängig von den Verhältnissen eines der wenigstens zwei Detektorsignale identifiziert wird, wobei das Verhältnis jedes Paars, welches das identifizierte Detektorsignal beinhaltet, um wenigstens einen vordefinierten Schwellwert von einem zugehörigen vordefinierten Referenzverhältnis abweicht.

5. Verfahren nach Anspruch 4,
**dadurch gekennzeichnet, dass**
eine eingeschränkte Funktionsfähigkeit eines dem identifizierten Detektorsignal zugeordneten optischen Detektors (7a, 7b, 7c, 7d) der wenigstens zwei optischen Detektoren (7a, 7b, 7c, 7d) identifiziert wird.

6. Verfahren nach Anspruch 3,
**dadurch gekennzeichnet, dass**
mittels der Recheneinheit (2a) abhängig von den Verhältnissen eine Gruppe der wenigstens zwei Detektorsignale identifiziert wird, wobei das Verhältnis jedes Paars, welches ein Detektorsignal der identifizierten Gruppe und ein Detektorsignal, das nicht Teil der identifizierten Gruppe ist, beinhaltet, um wenigstens einen vordefinierten Schwellwert von einem zugehörigen vordefinierten Referenzverhältnis abweicht.

7. Verfahren nach Anspruch 6,
**dadurch gekennzeichnet, dass**
eine eingeschränkte Funktionsfähigkeit eine der identifizierten Gruppe zugeordneten Lichtquelle der Sendeeinheit (6) identifiziert wird.

8. Laserscannervorrichtung mit einer Recheneinheit (2a) und einem Laserscanner (2b), wobei
- der Laserscanner (2b) ein Gehäuse (4) mit einem lichtdurchlässigen Fenster (5), eine innerhalb des Gehäuses (4) angeordnete Sendeeinheit (6) zum Aussenden von Lasersignalen (9), eine Steuereinheit (8), eine bewegliche Umlenkeinheit (10) zur Umlenkung der Lasersignale (9) und eine innerhalb des Gehäuses (4) angeordnete Detektoreinheit (7) aufweist;
- die Steuereinheit (8) dazu eingerichtet ist, die Sendeeinheit (6) anzusteuern, während einer Prüfphase wenigstens ein Prüfsignal (15) zu senden die Umlenkeinheit (10) anzusteuern, so dass die Umlenkeinheit (10) während der Prüfphase bezüglich der Sendeeinheit (6) derart ausgerichtet ist, dass das wenigstens eine Prüfsignal (15) nicht auf das Fenster (5) gelenkt wird;
**dadurch gekennzeichnet, dass**
- die Detektoreinheit (7) wenigstens zwei optische Detektoren (7a, 7b, 7c, 7d) aufweist, die dazu eingerichtet sind, reflektierte und/oder gestreute Anteile (15') des wenigstens einen Prüfsignals (15) zu erfassen und basierend auf den erfassten Anteilen (15') wenigstens zwei Detektorsignale zu erzeugen; und
- die Recheneinheit (2a) dazu eingerichtet ist,
- für jedes der wenigstens zwei Detektorsignale eine Pulsweite zu bestimmen;
- ein Verhältnis der Pulsweite eines ersten Detektorsignals der wenigstens zwei Detektorsignale zu der Pulsweite eines zweiten Detektorsignals der wenigstens zwei Detektorsignale zu bestimmen; und
- eine Funktionsfähigkeit der Sendeeinheit (6) und/oder der Detektoreinheit (7) basierend auf dem Verhältnis zu überprüfen.

9. Laserscannervorrichtung nach Anspruch 8,
**dadurch gekennzeichnet, dass**
die Umlenkeinheit (10) einen drehbaren oder schwenkbaren Spiegel oder ein mikroelektromechanisches Spiegelsystem beinhaltet.

10. Laserscannervorrichtung nach einem der Ansprüche 8 oder 9,
**dadurch gekennzeichnet, dass**
- die Sendeeinheit (6) wenigstens zwei Lichtquellen aufweist, wobei jede Lichtquelle der wenigstens zwei Lichtquellen mindestens einem optischen Detektor (7a, 7b, 7c, 7d) der wenigstens zwei optischen Detektoren (7a, 7b, 7c, 7d) zugeordnet ist; und
- jeder optische Detektor (7a, 7b, 7c, 7d) der wenigstens zwei optischen Detektoren (7a, 7b, 7c, 7d) genau einer Lichtquelle der wenigstens zwei Lichtquellen zugeordnet ist.

11. Laserscannervorrichtung nach Anspruch 10,
**dadurch gekennzeichnet, dass**
die Steuereinheit (8) dazu eingerichtet ist, die Sendeeinheit (6) derart anzusteuern, dass die wenigstens zwei Lichtquellen jeweilige Prüfsignale (15) des wenigstens einen Prüfsignals (15) zeitlich versetzt senden.

12. Laserscannervorrichtung nach einem der Ansprüche 8 bis 11,
**dadurch gekennzeichnet, dass**
die Recheneinheit (2a) dazu eingerichtet ist, für jedes Paar von Detektorsignalen der wenigstens zwei Detektorsignale ein Verhältnis der Pulsweiten der Detektorsignale des jeweiligen Paars zueinander zu bestimmen und die Funktionsfähigkeit basierend auf den Verhältnissen der Paare von Detektorsignalen zu überprüfen.

13. Laserscannervorrichtung nach Anspruch 12,
**dadurch gekennzeichnet, dass**
- die Recheneinheit (2a) dazu eingerichtet ist, abhängig von den Verhältnissen eines der wenigstens zwei Detektorsignale zu identifizieren, wobei das Verhältnis jedes Paars, welches das identifizierte Detektorsignal beinhaltet, um wenigstens einen vordefinierten ersten Schwellwert von einem zugehörigen vordefinierten Referenzverhältnis abweicht; und/oder
- die Recheneinheit (2a) dazu eingerichtet ist, abhängig von den Verhältnissen eine Gruppe der wenigstens zwei Detektorsignale zu identifizieren, wobei das Verhältnis jedes Paars, welches ein Detektorsignal der identifizierten Gruppe und ein Detektorsignal, das nicht Teil der identifizierten Gruppe ist, beinhaltet, um wenigstens einen vordefinierten zweiten Schwellwert von einem zugehörigen vordefinierten Referenzverhältnis abweicht.

14. Kraftfahrzeug mit einer Laserscannervorrichtung (2) nach einem der Ansprüche 8 bis 13.

15. Computerprogrammprodukt mit Befehlen, die bewirken, dass eine Laserscannervorrichtung (2) nach einem der Ansprüche 8 bis 13 ein Verfahren nach einem der Ansprüche 1 bis 7 ausführt.

## Claims

1. Method for checking the function of a laser scanner (2b), which comprises a housing (4) with a light-transmissive window (5), a transmitter unit (6) for emitting laser signals (9) which is arranged within the housing (4), a movable deflection unit (10) for deflecting the laser signals (9), and a detector unit (7) arranged within the housing (4), wherein according to the method
- at least one test signal (15) is transmitted by means of the transmitter unit (6) during a test phase;
- the deflection unit (10) is aligned vis-à-vis the transmitter unit (6) during the test phase so that the at least one test signal (15) is not directed at the window (5);
**characterized in that**
- components (15') of the at least one test signal (15) are recorded by means of at least two optical detectors (7a, 7b, 7c, 7d) of the detector unit (7) and at least two detector signals are generated on the basis of the detected components (15');
- a pulse width is determined by means of a computing unit (2a) for each of the at least two detector signals;
- a ratio of the pulse width of a first detector signal of the at least two detector signals to the pulse width of a second detector signal of the at least two detector signals is determined by means of the computing unit (2a); and
- a functionality of the transmitter unit (6) and/or of the detector unit (7) is checked on the basis of the ratio.

2. Method according to Claim 1,
**characterized in that**
checking the functionality includes the ratio being compared to a predefined reference ratio by means of the computing unit (2a) and an error signal being generated depending on a result of the comparison.

3. Method according to either of the preceding claims, **characterized in that**
- a ratio of the pulse widths of the detector signals of the respective pair to one another is determined by means of the computing unit (2a) for each pair of detector signals of the at least two detector signals; and
- the functionality is checked on the basis of the ratios of the pairs of detector signals.

4. Method according to Claim 3,
**characterized in that**
one of the at least two detector signals is identified by means of the computing unit (2a) on the basis of the ratios, with the ratio of each pair containing the identified detector signal deviating by at least one predefined threshold value from an associated predefined reference ratio.

5. Method according to Claim 4,
**characterized in that**
a limited functionality of an optical detector (7a, 7b, 7c, 7d), assigned to the identified detector signal, of the at least two optical detectors (7a, 7b, 7c, 7d) is identified.

6. Method according to Claim 3,
**characterized in that**
a group of the at least two detector signals is identified by means of the computing unit (2a) on the basis of the ratios, with the ratio of each pair containing a detector signal from the identified group and a detector signal which is not part of the identified group deviating by at least one predefined threshold value from an associated predefined reference ratio.

7. Method according to Claim 6,
**characterized in that**
a limited functionality of a light source, assigned to the identified group, of the transmitter unit (6) is identified.

8. Laser scanner device having a computing unit (2a) and a laser scanner (2b), wherein
- the laser scanner (2b) has a housing (4) with a light-transmissive window (5), a transmitter unit (6) for emitting laser signals (9) which is arranged within the housing (4), a control unit (8), a movable deflection unit (10) for deflecting the laser signals (9), and a detector unit (7) arranged within the housing (4);
- the control unit (8) is configured to drive the transmitter unit (6) to transmit at least one test signal (15) during a test phase, to drive the deflection unit (10) in such a way that the deflection unit (10) is aligned vis-à-vis the transmitter unit (6) during the test phase so that the at least one test signal (15) is not directed at the window (5);
**characterized in that**
- the detector unit (7) has at least two optical detectors (7a, 7b, 7c, 7d) which are configured to record reflected and/or scattered components (15') of the at least one test signal (15) and to generate at least two detector signals on the basis of the detected components (15'); and
- the computing unit (2a) is configured
- to determine a pulse width for each of the at least two detector signals;
- to determine a ratio of the pulse width of a first detector signal of the at least two detector signals to the pulse width of a second detector signal of the at least two detector signals; and
- to check a functionality of the transmitter unit (6) and/or of the detector unit (7) on the basis of the ratio.

9. Laser scanner device according to Claim 8,
**characterized in that**
the deflection unit (10) contains a rotatable or pivotable mirror or a microelectromechanical mirror system.

10. Laser scanner device according to either of Claims 8 and 9,
**characterized in that**
- the transmitter unit (6) has at least two light sources, with each light source of the at least two light sources being assigned to at least one optical detector (7a, 7b, 7c, 7d) of the at least two optical detectors (7a, 7b, 7c, 7d); and
- each optical detector (7a, 7b, 7c, 7d) of the at least two optical detectors (7a, 7b, 7c, 7d) is assigned to exactly one light source of the at least two light sources.

11. Laser scanner device according to Claim 10,
**characterized in that**
the control unit (8) is configured to drive the transmitter unit (6) in such a way that the at least two light sources transmit respective test signals (15) of the at least one test signal (15) with a time offset.

12. Laser scanner device according to any of Claims 8 to 11,
**characterized in that**
the computing unit (2a) is configured to determine a ratio of the pulse widths of the detector signals of the respective pair to one another for each pair of detector signals of the at least two detector signals and to check the functionality on the basis of the ratios of the pairs of detector signals.

13. Laser scanner device according to Claim 12, **characterized in that**
- the computing unit (2a) is configured to identify one of the at least two detector signals on the basis of the ratios, with the ratio of each pair containing the identified detector signal deviating by at least one predefined first threshold value from an associated predefined reference ratio; and/or
- the computing unit (2a) is configured to identify a group of the at least two detector signals on the basis of the ratios, with the ratio of each pair containing a detector signal from the identified group and a detector signal which is not part of the identified group deviating by at least one predefined second threshold value from an associated predefined reference ratio.

14. Motor vehicle having a laser scanner device (2) according to any of Claims 8 to 13.

15. Computer program product having instructions which cause a laser scanner device (2) according to any of Claims 8 to 13 to carry out a method according to any of Claims 1 to 7.

## Revendications

1. Procédé de vérification du fonctionnement d'un scanner à laser (2b) qui possède un boîtier (4) pourvu d'une fenêtre (5) laissant passer la lumière, d'une unité d'émission (6) disposée à l'intérieur du boîtier (4) servant à émettre des signaux laser (9), d'une unité de déviation (10) mobile destinée à dévier les signaux laser (9) ainsi que d'une unité de détection (7) disposée à l'intérieur du boîtier (4), selon le procédé
- au moins un signal de contrôle (15) étant émis au moyen de l'unité d'émission (6) pendant une phase de contrôle ;
- l'unité de déviation (10) étant orientée par rapport à l'unité d'émission (6) pendant la phase de contrôle de telle sorte que l'au moins un signal de contrôle (15) n'est pas dirigé vers la fenêtre (5) ;
**caractérisé en ce que**
- des parties (15') de l'au moins un signal de contrôle (15) sont détectées au moyen d'au moins deux détecteurs optiques (7a, 7b, 7c, 7d) de l'unité de détection (7) et au moins deux signaux de détecteur sont générés sur la base des parties (15') détectées ;
- une largeur d'impulsion est déterminée au moyen d'une unité de calcul (2a) pour chacun des au moins deux signaux de détecteur ;
- un rapport entre la largeur d'impulsion d'un premier signal de détecteur des au moins deux signaux de détecteur et la largeur d'impulsion d'un deuxième signal de détecteur des au moins deux signaux de détecteur est déterminé au moyen de l'unité de calcul (2a) ; et
- une capacité de fonctionnement de l'unité d'émission (6) et/ou de l'unité de détection (7) est vérifiée en se basant sur le rapport.

2. Procédé selon la revendication 1,
**caractérisé en ce que**
la vérification de la capacité de fonctionnement implique que le rapport est comparé à un rapport de référence prédéfini au moyen de l'unité de calcul (2a) et qu'un signal d'erreur est généré en fonction d'un résultat de la comparaison.

3. Procédé selon l'une quelconque des revendications précédentes,
**caractérisé en ce que**
- un rapport entre les largeurs d'impulsion des signaux de détecteur de la paire respective est déterminé au moyen de l'unité de calcul (2a) pour chaque paire de signaux de détecteur des au moins deux signaux de détecteur ; et
- la capacité de fonctionnement est vérifiée en se basant sur les rapports des paires de signaux de détecteur.

4. Procédé selon la revendication 3,
**caractérisé en ce que**
l'un des au moins deux signaux de détecteur est identifié au moyen de l'unité de calcul (2a) en fonction des rapports, le rapport de chaque paire qui contient le signal de détecteur identifié s'écartant par au moins une valeur de seuil prédéfinie d'un rapport de référence prédéfini associé.

5. Procédé selon la revendication 4,
**caractérisé en ce que**
une capacité de fonctionnement limitée d'un détecteur optique (7a, 7b, 7c, 7d) associé au signal de détecteur identifié parmi les au moins deux détecteurs optiques (7a, 7b, 7c, 7d) est identifiée.

6. Procédé selon la revendication 3,
**caractérisé en ce que**
un groupe des au moins deux signaux de détecteur est identifié au moyen de l'unité de calcul (2a) en fonction des rapports, le rapport de chaque paire qui contient un signal de détecteur du groupe identifié et un signal de détecteur qui ne fait pas partie du groupe identifié s'écartant par au moins une valeur de seuil prédéfinie d'un rapport de référence prédéfini associé.

7. Procédé selon la revendication 6,
**caractérisé en ce que**
une capacité de fonctionnement limitée d'une source de lumière de l'unité d'émission (6) associée au groupe identifié est identifiée.

8. Dispositif de balayage à laser comprenant une unité de calcul (2a) et un scanner à laser (2b),
- le scanner à laser (2b) possédant un boîtier (4) pourvu d'une fenêtre (5) laissant passer la lumière, d'une unité d'émission (6) disposée à l'intérieur du boîtier (4) servant à émettre des signaux laser (9), d'une unité de commande (8), d'une unité de déviation (10) mobile destinée à dévier les signaux laser (9) ainsi que d'une unité de détection (7) disposée à l'intérieur du boîtier (4) ;
- l'unité de commande (8) étant conçue pour commander l'unité d'émission (6), pour émettre au moins un signal de contrôle (15) pendant une phase de contrôle, pour commander l'unité de déviation (10) de sorte que l'unité de déviation (10), pendant la phase de contrôle, est orientée par rapport à l'unité d'émission (6) de telle sorte que l'au moins un signal de contrôle (15) n'est pas dirigé sur la fenêtre (5) ;
**caractérisé en ce que**
- l'unité de détection (7) possède au moins deux détecteurs optiques (7a, 7b, 7c, 7d) qui sont conçus pour détecter des parties (15') réfléchies et/ou diffusées de l'au moins un signal de contrôle (15) et pour générer au moins deux signaux de détecteur sur la base des parties détectées (15') ; et
- l'unité de calcul (2a) est conçue pour
- déterminer une largeur d'impulsion pour chacun des au moins deux signaux de détecteur ;
- déterminer un rapport entre la largeur d'impulsion d'un premier signal de détecteur des au moins deux signaux de détecteur et la largeur d'impulsion d'un deuxième signal de détecteur des au moins deux signaux de détecteur ; et
- vérifier une capacité de fonctionnement de l'unité d'émission (6) et/ou de l'unité de détection (7) en se basant sur le rapport.

9. Dispositif de balayage à laser selon la revendication 8,
**caractérisé en ce que**
l'unité de déviation (10) comprend un miroir rotatif ou pivotant ou un système de miroir micro-électromécanique.

10. Dispositif de balayage à laser selon l'une des revendications 8 ou 9,
**caractérisé en ce que**
- l'unité d'émission (6) possède au moins deux sources de lumière, chaque source de lumière des au moins deux sources de lumière étant associée à au moins un détecteur optique (7a, 7b, 7c, 7d) des au moins deux détecteurs optiques (7a, 7b, 7c, 7d) ; et
- chaque détecteur optique (7a, 7b, 7c, 7d) des au moins deux détecteurs optiques (7a, 7b, 7c, 7d) est associé exactement à une source de lumière des au moins deux sources de lumière.

11. Dispositif de balayage à laser selon la revendication 10,
**caractérisé en ce que**
l'unité de commande (8) est conçue pour commander l'unité d'émission (6) de telle sorte que les au moins deux sources de lumière émettent des signaux de contrôle (15) respectifs de l'au moins un signal de contrôle (15) de manière décalée dans le temps.

12. Dispositif de balayage à laser selon l'une des revendications 8 à 11,
**caractérisé en ce que**
l'unité de calcul (2a) est conçue pour déterminer, pour chaque paire de signaux de détecteur des au moins deux signaux de détecteur, un rapport entre les largeurs d'impulsion des signaux de détecteur de la paire respective et pour vérifier la capacité de fonctionnement sur la base des rapports des paires de signaux de détecteur.

13. Dispositif de balayage à laser selon la revendication 12,
**caractérisé en ce que**
- l'unité de calcul (2a) est conçue pour identifier l'un des au moins deux signaux de détecteur en fonction des rapports, le rapport de chaque paire qui contient le signal de détecteur identifié s'écartant par au moins une première valeur de seuil prédéfinie d'un rapport de référence prédéfini associé ; et/ou
- l'unité de calcul (2a) est conçue pour identifier un groupe des au moins deux signaux de détecteur en fonction des rapports, le rapport de chaque paire qui contient un signal de détecteur du groupe identifié et un signal de détecteur qui ne fait pas partie du groupe identifié s'écartant par au moins une deuxième valeur de seuil prédéfinie d'un rapport de référence prédéfini associé.

14. Véhicule automobile comprenant un dispositif de balayage à laser (2) selon l'une des revendications 8 à 13.

15. Produit de programme informatique comprenant des instructions qui ont pour effet qu'un dispositif de balayage à laser (2) selon l'une des revendications 8 à 13 met en œuvre un procédé selon l'une des revendications 1 à 7.
